**Europäisches Patentamt**

**European Patent Office**

**Office européen des brevets**

(19)

(11) Veröffentlichungsnummer : **0 125 380 B2**

(12) **NEUE EUROPÄISCHE PATENTSCHRIFT**

(45) Veröffentlichungstag der neuen Patentschrift :
18.12.91 Patentblatt 91/51

(51) Int. Cl.⁵ : **F16K 31/00, F16K 37/00**

(21) Anmeldenummer : **84100948.3**

(22) Anmeldetag : **31.01.84**

(54) **Thermostatbetätigtes Ventil zur Regelung des Durchflusses.**

(30) Priorität : **16.04.83 DE 3313896**

(43) Veröffentlichungstag der Anmeldung :
**21.11.84 Patentblatt 84/47**

(45) Bekanntmachung des Hinweises auf die
Patenterteilung :
**30.03.88 Patentblatt 88/13**

(45) Bekanntmachung des Hinweises auf die
Entscheidung über den Einspruch :
**18.12.91 Patentblatt 91/51**

(84) Benannte Vertragsstaaten :
**DE FR GB**

(56) Entgegenhaltungen :
DD-A- 32 636
DE-A- 1 905 039
DE-A- 2 701 840
DE-C- 64 617
DE-C- 555 509
DE-C- 1 055 311

(56) Entgegenhaltungen :
DE-U- 7 142 759
FR-A- 1 295 803
GB-A- 801 882
GB-A- 981 090
GB-A- 1 008 525
GB-A- 1 556 136
US-A- 2 115 501
US-A- 2 833 478
US-A- 3 109 589
US-A- 4 016 901

(73) Patentinhaber :
**Behr-Thomson-Dehnstoffregler**
**Verwaltungs-GmbH**
**Enzstrasse 25**
**W-7014 Kornwestheim (DE)**

(72) Erfinder : **Kunze, Jürgen**
**Blumenstrasse 21**
**W-7255 Rutesheim (DE)**

(74) Vertreter : **Heumann, Christian**
**Behr GmbH & Co. Patentabteilung**
**Mauserstrasse 3 Postfach 30 09 20**
**W-7000 Stuttgart 30 (DE)**

EP 0 125 380 B2

## Beschreibung

Die Erfindung bezieht sich auf ein thermostatbetätigtes Ventil zur Regelung des Durchflusses eines flüssigen Mediums nach dem Oberbegriff des Patentanspruch 1. Derartige Ventile sind durch die DE-A-27 01 840 bekannt.

Diese Thermostatventile werden unter anderem als sogenannte Kühlmittelregler für Großmotoren, insbesondere im Schiffbau, eingesetzt. Dort bestehen zum Beispiel Vorschriften, die eine Möglichkeit der Notverstellung des Kühlmittelreglers im Falle des Ausfalls des Thermostaten fordern. Bei einem solchen Ausfall würde der Regler den Durchfluß zum Kühler nämlich nicht freigeben, und die Folge wäre eine zu starke Erwärmung des Kühlmittels und somit eine Überhitzung des Motors. Bei dem Ventil nach der DE-A-27 01 840 ist eine Notverstellung nicht möglich.

Durch die US-A-2,833,478 wurde zwar eine Art von Notverstellung für ein Thermostatventil bekannt, allerdings ist diese Notverstellung für ein thermostatbetätigtes Tellerventil vorgesehen und durch eine das Ventilgehäuse durchsetzende Hohlwelle gekennzeichnet, die einerseits, d.h. außerhalb des Gehäuses mit einer flexiblen Welle und andererseits, d.h. im Gehäuseinneren über ein Kreuzgelenk mit einem Gleitstück verbunden ist. Der Thermostat weist einen Kolben mit einem endseitigen Gewindestutzen auf, der in ein entsprechendes Gewinde im Tellerventil eingreift, so daß das Tellerventil durch Drehung des Gleitstücks auf dem Gewindestutzen axial verstellbar ist. Diese konstruktiv ziemlich aufwendige Notverstellung ist auf das gattungsgemäße Thermostatventil nicht ohne weiteres übertragbar und darüber hinaus wegen der Vielzahl von Einzelteilen auch nicht vorteilhaft.

Schließlich wurde durch die DE-C-555 509 ein thermostatbestätigtes Mischventil bekannt, welches als Doppelkegelventil mit einem Falt- oder Wellrohr als Thermostat ausgebildet ist. Dieses Wellrohr ist mit einer Gewindespindel verbunden, die in einem entsprechenden Gewinde des Gehäuses aufgenommen wird und dieses durchsetzt. Am äußeren, d.h. außerhalb des Ventilgehäuses gelegenen Bereich der Gewindespindel ist ein Griff mit einem Zeiger vorgesehen, wodurch das Verhältnis der Öffnungsquerschnitte für die beiden Kegelventile eingestellt werden kann. Es handelt sich hierbei also nicht um eine Notverstellung, sondern um eine Justierung des Mischventils durch Verschiebung der miteinander verbundenen kegelförmigen Ventilkörper gegenüber deren Ventilsitz.

Es ist die Aufgabe der vorliegenden Erfindung, für das bekannte thermostatbetätigte Ventil gemäß dem Oberbegriff des Patentanspruches 1 die Möglichkeit einer einfachen Notverstellung des Ventilschließgliedes und die Möglichkeit einer Funktionskontrolle von außen her zu schaffen.

Diese Aufgabe wird durch die kennzeichnenden Merkmale des Patentanspruches 1 gelöst. Dadurch, daß das Ventilschließglied mit einer die Ventilgehäusewand durchsetzenden Betätigungsstange verbunden, die Betätigungsstange axial gleitend in der Ventilgehäusewand geführt und abgedichtet ist und sich über eine Feststellmutter (Widerlager) gegenüber der Gehäusewand abstützen kann, besteht die Möglichkeit, das Ventilschließglied im Falle des Ausfalls des Thermostaten auf einfache Weise sofort von außen zu verstellen und somit den Betrieb des Motors aufrecht zu erhalten. Dabei kann über die Feststellmutter und das Herausschrauben der Betätigungsstange jede beliebige Ventilstellung von außen her eingestellt werden. Gleichzeitig kann durch die jeweilige Stellung der Betätigungsstange auch die Stellung des Ventilschließgliedes und damit die Funktion des gesamten Ventiles von außen kontrolliert werden. Das Schauglas dient natürlich auch als Abdichtung und Schutzmaßnahme für die sich bewegende Betätigungsstange. Die erfindungsgemäße Lösung bietet ferner den Vorteil, daß sie auch an bestehenden Thermostatventilen ohne Notverstellung und ohne Stellungsanzeige nachträglich (im Wege der Nachrüstung) eingebaut werden kann, und zwar mit einfachsten Mitteln: Dazu braucht nur in der Wandung des Ventilgehäuses eine entsprechende Ausnehmung für die Betätigungsstange vorgesehen und diese mittels ihres innenliegenden Kupplungsstückes mit dem Kolben des Dehnstoffelementes verbunden zu werden.

Weitere vorteilhafte Ausgestaltungen der Erfindung ergeben sich aus den Unteransprüchen 2 - 4; sie betreffen zweckmäßige Weiterbildungen des Kupplungsstückes.

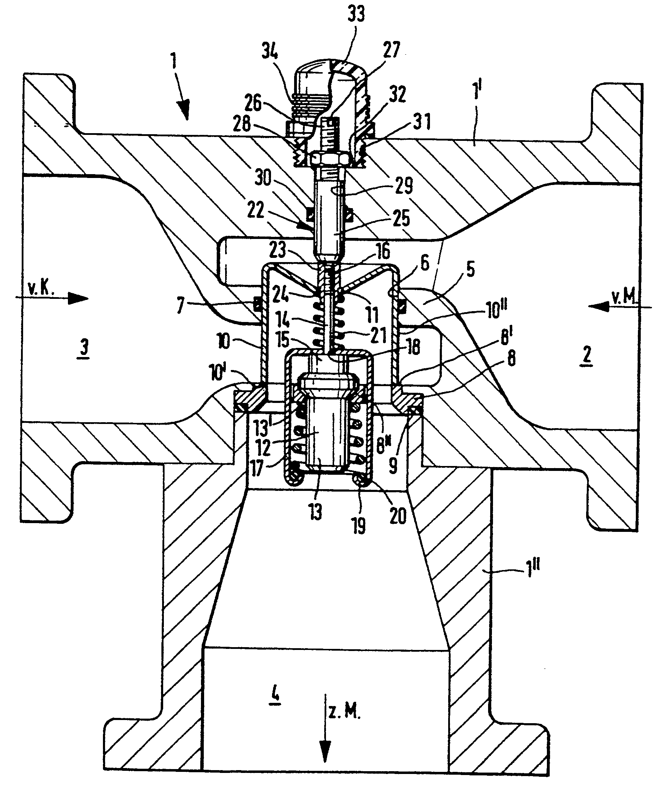

Ein Ausführungsbeispiel der Erfindung ist in der Zeichnung dargestellt und wird im folgenden näher beschrieben.

Die Zeichnung zeigt als Ausführungsbeispiel einen Kühlmittelregler mit einem thermostatgesteuerten Ringschieber für Grossmotoren. Dieses Kühlmittelthermostatventil umfasst ein aus zwei Gehäusehälften 1′ und 1″ bestehendes Ventilgehäuse 1 mit zwei Eintrittsstutzen 2, 3 und einem Austrittsstutzen 4, durch den das Kühlmittel zum Motor hinströmt, während es durch den Eintrittsstutzen 2 vom Motor und durch den Eintrittsstutzen 3 vom Kühler herkommt - es handelt sich hier also um einen Mischregler. Im Inneren des Ventilgehäuses 1 befindet sich eine Gehäusewand 5 mit einer Gehäusebohrung 6, die in einer Ringnut einen O-Ring 7 aufnimmt. In die Gehäusehälfte 1′ ist ein Gehäuseeinsatzring 8 eingesetzt, der über eine Dichtung 9 nach aussen abgedichtet und durch eine andere Gehäusehälfte 1″ gehalten ist. Beide Gehäusehälften 1′ und 1″ sind auf nicht

2

dargestellte Weise miteinander fest verbunden. Der Gehäuseeinsatzring 8 weist eine zum Inneren des Ventilgehäuses gerichtete Stirnfläche 8' und in seinem koaxial innenliegenden Bereich ein Widerlager 8" auf, an dem sich ein Dehnstoffelement 12 über seinen Gehäusebund 13' abstützt, während das Gehäuse 13 als Fühlteil des Dehnstoffelementes 12 vom Durchflussmedium frei umspülbar ist. Das Dehnstoffelement 12 weist ferner einen Kolben 14 auf, der in seinem inneren Bereich einen Bund 15 und an seinem äusseren Bereich ein Gewinde 16 trägt. Auf dem Bund 15 des Kolbens 14 liegt ein Bügel 17, der durch eine Aufnahmebohrung 18 gegenüber dem Kolben 14 zentriert ist und der in seinem unteren Bereich ein Federwiderlager 19 aufweist. Eine Rückstellfeder 20 stützt sich einerseits an diesem Federwiderlager 19 und andererseits an der Unterseite des Widerlagers 8" des Gehäuseeinsatzringes 8 ab. In der Gehäusebohrung 6 ist ein Ringschieber 10 gleitend angeordnet, der über den O-Ring 7 abgedichtet wird. Der Ringschieber 10 weist in seinem oberen koaxial innenliegenden Bereich einen Mitnahmeflansch 11 auf, über den der Ringschieber mit dem Dehnstoffelement 12 verbunden ist: zwischen Unterseite des Mitnahmeflansches 11 und Oberseite des Bügels 17 stützt sich eine Überwegfeder 21 ab, über die die Kolbenbewegung auf den Ringschieber 10 übertragen wird. In der Zeichnung nimmt der Ringschieber 10 seine unterste Stellung ein und stützt sich dabei mit seiner unteren Stirnfläche 10' gegen die obere Stirnfläche 8' ab. Die Mantelfläche 10" ist durch den O-Ring 7 abgedichtet, so dass die beiden Eintrittsstutzen 2 und 3 strömungsmässig voneinander getrennt sind. Bei dieser unteren Stellung des Ringschiebers 10 ist das Dehnstoffelement 12 kalt, d.h. der Kolben 14 befindet sich aufgrund der Wirkung der Rückstellfeder 20 in seiner eingefahrenen Stellung.

Der Ringschieber 10 bzw. der Kolben 14 sind mit einer Betätigungsstange 22 verbunden, die sich bis auf die Aussenseite des Ventilgehäuses erstreckt und somit den Ringschieber 10 von aussen her zugänglich und kontrollierbar macht. Die Betätigungsstange 22 weist einen innenliegenden, hohl ausgebildeten Abschnitt, ein sogenanntes Kupplungsstück 23 mit einem Bund 24 auf, woran sich ein Führungsabschnitt 25 sowie ein aussenliegender Gewindeabschnitt 26 anschliessen. Letzterer trägt eine Feststellmutter 28 und an seinem Kopfende einen Schlitz 27, in den ein Schraubenzieher angesetzt werden kann. Die Gehäusehälfte 1' weist eine Durchgangsbohrung 29 auf, die in einer Ringnut einen Dichtring 30 aufnimmt. Ferner ist in die Gehäusehälfte 1' eine Gewindebohrung 31 eingearbeitet, die durch einen Absatz bzw. eine Auflagefläche 32 nach innen begrenzt wird. In diese Gewindebohrung 31 ist ein Schauglas 33 dicht eingeschraubt, welches auf seinem äusseren etwa zylindrisch ausgebildeten Bereich mehrere Markierungsringe 34 trägt, über die die jeweilige Stellung der Betätigungsorgane 22 von aussen abgelesen werden kann.

Der innenliegende Abschnitt der Betätigungsstange 22 ist über sein Kupplungsstück 23 fest mit dem äusseren Ende 16 des Kolbens 14 verbunden: bei dem in der Zeichnung dargestellten Ausführungsbeispiel erfolgt diese Verbindung über das Gewinde 16 auf dem Kolbenende und im Inneren des Kupplungsstückes 23. Natürlich sind auch andere Verbindungsmöglichkeiten zwischen Betätigungsstange 22 bzw. Kupplungsstück 23 und Kolben 14 denkbar, z.B. eine kraftschlüssige Verbindung in Form eines Presssitzes oder eine formschlüssige Verbindung durch Verstiftung oder eine unlösbare Verbindung durch Schweissen oder Löten. Somit besteht zwischen Kolben 14 und Betätigungsstange 22 eine zug- und druckfeste Verbindung. Der Mitnahmeflansch 11 des Ringschiebers 10 ist über die Aussenfläche des Kupplungsstückes 23 geschoben und stützt sich infolge des Druckes der Überwegfeder 21 gegen den Bund 24 am Kupplungsstück 23 ab. Somit besteht zwischen Ringschieber 10 und Betätigungsstange 22 ebenfalls eine zug- und druckfeste Verbindung, die als Druckverbindung starr, als Zugverbindung dagegen elastisch ausgebildet ist.

Die Arbeitsweise des zuvor beschriebenen Kühlmittelreglers ist - bis auf die Funktion der Betätigungsstange 22 - an sich bekannt: bei kaltem Motor, d.h. bei kaltem Kühlmittel, befindet sich der Ringschieber 10 in seiner unteren Endstellung, wie dies in der Zeichnung dargestellt ist. Damit ist die Verbindung zwischen dem Eintrittsstutzen 3 und dem Austrittsstutzen 4 unterbrochen, während die Verbindung zwischen Eintrittsstutzen 2, der direkt vom Motor kommendes Kühlmittel führt, freigegeben ist. Das Kühlmittel tritt hierbei durch den in seinem oberen Bereich offenen Ringschieber 10 hindurch und umspült hierbei den Thermostaten bzw. das Dehnstoffelement 12, insbesondere dessen Fühlteil 13. Sobald sich das Kühlmittel infolge ansteigender Motortemperatur erwärmt, dehnt sich das im Dehnstoffelement befindliche Wachs aus und drückt den Kolben 14 aus dem Gehäuse 13 heraus, wobei sich das Gehäuse 13 über seinen Bund 13' gegenüber dem im Ventilgehäuse 1 befestigten Widerlager 8" abstützt. Der Kolben 14 trägt auf seinem Bund 15 den Bügel 17, der über sein Widerlager 19 die sich ebenfalls an dem Widerlager 8" abstützende Rückstellfeder 20 aufnimmt. Somit arbeitet der Kolben 14 beim Ausfahren aus dem Gehäuse 13 gegen die Kraft der Rückstellfeder 20, die ihn beim Abkühlen d.h. bei der Kontraktion des Wachses, auch wieder in das Gehäuse 13 zurückstellt. Die Verbindung vom Kolben 14 auf den Ringschieber 10 erfolgt über die Überwegfeder 21, die sich einerseits auf der Oberseite des Bügels 17 und andererseits an der Unterseite des Mitnahmeflansches 11 des Ringschiebers 10 abstützt. Wird nun der Ringschieber 10 infolge des ausfahrenden Kolbens 14 nach oben verschoben, so dass allmählich ein Strömungsquerschnitt zwischen Eintrittsstutzen 3 und Austrittsstutzen 4 freigegeben wird, so wird gleichzeitig auch die Betätigungsstange 22 nach oben verschoben. Durch die Anzeigemarkierungen 34 am Schauglas 33

3

kann dann die jeweilige Position das Ringschiebers 10 abgelesen werden.

Fällt nun beispielsweise der Thermostat aus, so würde der Ringschieber seine der Temperatur des Kühlmittels entsprechende Position nicht mehr einnehmen können. Hier schafft die Betätigungsstange 22 den gewünschten Ausweg, indem durch sie der Ringschieber in die gewünschte Position gebracht werden kann, ohne dass der Betrieb des Motors oder des Kühlsystems unterbrochen werden muss. Nach Abnehmen bzw. Herausschrauben des Schauglases 33 wird die Betätigungsstange 22 mit einem Schraubenzieher an ihrem Schlitz 27 gegen Verdrehen festgehalten und gleichzeitig die Feststellmutter 28 mit einem Schraubenschlüssel derart gedreht, dass sich die Betätigungsstange 22 nach aussen bewegt. Damit wird gleichzeitig der Ringschieber 10 verschoben, und zwar erfolgt hierbei der Kraftfluss von der Betätigungsstange 22 über ihr Kupplungsstück 23 auf den Kolben 16 bzw. 14, über dessen Bund 15 auf den Bügel 17 und von diesem über die Überwegfeder 21 auf den Mitnahmeflansch 11 des Ringschiebers 10. Die Betätigungsstange 22 kann nun soweit herausgeschraubt werden, dass die Oberkante des Ringschiebers 10 an der Unterseite der Gehäusehälfte 1' zum Anschlag kommt und damit der volle Querschnitt zwischen Eintrittsstutzen 3 und Austrittsstutzen 4 freigegeben ist. Damit ist gewährleistet, dass das gesamte Kühlmittel über den Kühler strömt und somit hinreichend gekühlt wird, womit der Betrieb des Motors in jedem Falle aufrechterhalten werden kann. Natürlich sind auch entsprechende Zwischenstellungen des Ringschiebers 10 mit Hilfe der Betätigungsstange 22 und deren Feststellmutter 28 möglich. Somit ist eine Notverstellung des Kühlmittelreglers von aussen mit einfachen Mitteln gewährleistet, die darüber hinaus auch an bestehenden Kühlmittelreglern nachträglich eingebaut werden kann.

Das in der Zeichnung dargestellte Ausführungsbeispiel der Erfindung zeigt - wie bereits eingangs erwähnt - einen sogenannten Mischregler mit zwei Eintritts- und einem Austrittsstutzen. Die Erfindung kann jedoch ebenso ihre Anwendung bei einem Verteilerventil mit einem Eingang und zwei Ausgängen finden.

Ebenso ist es möglich, dass die Stellung des Ringschiebers an anderer, von dem Ventil entfernt liegender Stelle durch Anschluss an ein geeignetes Übertragungssystem sichtbar und steuerbar gemacht wird.


## Patentansprüche

1. Thermostatbetätigtes Ventil zur Regelung des Durchflusses eines flüssigen Mediums, bestehend aus einem Ventilgehäuse (1) mit mindestens einer Zufluß- und mindestens einer Abflußöffnung (2,3,4), aus mindestens einem als Ringschieber (10) ausgebildeten Ventilschließglied und mindestens einem zugehörigen Ventilsitz, wobei der Ringschieber (10) über einen sich am Ventilgehäuse abstützenden, vom Durchflußmedium beaufschlagten, als Dehnstoffelement (12) ausgebildeten Thermostaten und eine Rückstellfeder (20) betätigt wird, wobei das Dehnstoffelement (12) ein Gehäuse (13) und einen Kolben (14) aufweist, der über eine Hülse (23) mit einem inneren koaxialen Flansch (11) des Ringschiebers (10) verbunden ist, **dadurch gekennzeichnet, daß** die Hülse als Kupplungsstück (23) einer die Wandung (1') des Ventilgehäuses (1) durchsetzenden Betätigungsstange (22) ausgebildet ist, wobei die Betätigungsstange (22) zur Verstellung des Ventils von außen zugänglich und wobei der nach außen ragende Bereich (26) der Betätigungsstange (22) zur Sichtkontrolle der Funktion des Ventils durch ein Schauglas (33) mit Anzeigemarkierungen (34) abgedeckt ist und daß die Betätigungsstange (22) als Zugstange ausgebildet ist, die in einer Ausnehmung (29) in der Wandung (1') des Ventilgehäuses (1) gleitend geführt und abgedichtet ist und daß die Betätigungsstange (22) an ihrem nach außen ragenden Bereich einen Gewindeabschnitt (26) mit einer Feststellmutter (28) aufweist, die als einstellbares Widerlager gegenüber der Auflagefläche (32) der Wandung (1') des Ventilgehäuses (1) dient.

2. Ventil nach Anspruch 1, **dadurch gekennzeichnet, daß** das Kupplungsstück (23) formschlüssig mit dem Kolben (14,16) verbunden ist.

3. Ventil nach Anspruch 1, **dadurch gekennzeichnet, daß** das Kupplungsstück (23) kraft- bzw. reibschlüssig mit dem Kolben (14,16) verbunden ist.

4. Ventil nach Anspruch 1, **dadurch gekennzeichnet, daß** das Kupplungsstück (23) unlösbar mit dem Kolben verbunden ist.


## Claims

1. A thermostatically actuated valve for regulating the through flow of a fluid medium, comprising a valve housing (1) with at least one feed flow opening and at least one discharge flow opening (2, 3, 4), at least one valve closing member which is in the form of an annular slider (10), and at least one associated valve seat, wherein the annular slider (10) is actuated by way of a thermostat which is supported on the valve housing and which is acted upon by the through-flow medium and which is in the form of an expansion material element

4

(12), and a return spring (20), wherein the expansion material element (12) has a housing (13) and a piston (14) which is connected by way of a sleeve (23) to an inner coaxial flange (11) of the annular slider (10), characterised in that the sleeve is in the form of a coupling portion (23) of an actuating rod (22) which passes through the wall (1') of the valve housing (1), wherein the actuating rod (22) is accessible from the outside for adjustment of the valve and wherein the outwardly projecting region (26) of the actuating rod (22), for visual checking of the function of the valve, is covered by a sight glass (33) with indicator markings (34), and that the actuating rod (22) is in the form of a pulling rod which is sealed and slidably guided in an opening (29) in the wall (1') of the valve housing (1) and that, on its outwardly projecting region, the actuating rod (22) has a screwthreaded portion (26) with a lock nut (28) which serves as an adjustable support relative to the support surface (32) of the wall (1') of the valve housing (1).

2. A valve according to claim 1 characterised in that the coupling portion (23) is positively connected to the piston (14, 16).

3. A valve according to claim 1 characterised in that the coupling portion (23) is force-lockingly or frictionally connected to the piston (14, 16).

4. A valve according to claim 1 characterised in that the coupling portion (23) is non-releasably connected to the piston.

## Revendications

1. Soupape à commande thermostatique pour le réglage du débit d'un liquide, constituée par un corps (1) comportant au moins un orifice d'entrée et au moins un orifice de sortie (2,3,4), au moins un obturateur réalisé sous la forme d'un tiroir cylindrique (10) et au moins un siège correspondant, le tiroir cylindrique (10) étant actionné par un thermostat réalisé sous forme d'élément à dilatation (12) balayé par le liquide et prenant appui sur le corps de soupape, ainsi que par un ressort de rappel (20), l'élément à dilatation (12) comprenant un boîtier (13) et un piston (14) qui est relié par une douille (23) à une bride (11) coaxiale intérieure du tiroir cylindrique (10), ladite soupape étant caractérisée en ce que la douille est réalisée sous forme d'une pièce d'accouplement (23) d'une tige de manoeuvre (22) qui traverse la paroi (1') du corps (1) de la soupape, la tige de manoeuvre (22) étant accessible de l'extérieur pour le réglage de la soupape et sa partie (26) en saillie à l'extérieur étant recouverte par un regard (33) portant des marquages (34) pour le contrôle visuel du fonctionnement de la soupape, en ce que la tige de manoeuvre (22) est réalisée sous forme d'une barre de traction qui est guidée à coulissement et de manière étanche dans un alésage (29) de la paroi (1') du corps (1) de la soupape, et en ce que la tige de manoeuvre (22) comporte sur sa partie en saillie à l'extérieur un tronçon fileté (26) équipé d'un écrou de blocage (28) qui constitue une butée réglable par rapport à la surface d'appui (32) de la paroi (1') du corps (1) de la soupape.

2. Soupape selon la revendication 1, caractérisée en ce que la pièce d'accouplement (23) est reliée au piston (14,16) par complémentarité de formes.

3. Soupape selon la revendication 1, caractérisée en ce que la pièce d'accouplement (23) est reliée au piston (14,16) par conjugaison de forces ou par friction.

4. Soupape selon la revendication 1, caractérisée en ce que la pièce d'accouplement (23) est reliée de manière imperdable au piston.